# EUROPEAN PATENT SPECIFICATION

(11) **EP 2 853 117 B1**
(45) Date of publication and mention of the grant of the patent: **07.03.2018**
(21) Application number: 12761688.6
(22) Date of filing: 21.05.2012
(51) Int. Cl.: H04W 48/18, H04L 29/06, H04W 12/06, H04W 48/08, H04W 8/26, H04W 88/10, H04W 76/02

(54) **A MOBILE STATION AND A WIRELESS ACCESS POINT AND METHODS THEREIN IN A WIRELESS COMMUNICATIONS NETWORK**
MOBILSTATION UND DRAHTLOSER ZUGANGSPUNKT SOWIE VERFAHREN DARIN IN EINEM DRAHTLOSEN KOMMUNIKATIONSNETZWERK
STATION MOBILE ET POINT D'ACCÈS SANS FIL ET LEURS PROCÉDÉS DANS UN RÉSEAU DE COMMUNICATION SANS FIL

(43) Date of publication of application: 01.04.2015
(73) Proprietor: Telefonaktiebolaget LM Ericsson (publ), 164 83 Stockholm (SE)
(72) Inventor: WESTERBERG, Erik, SE-122 38 Enskede (SE); BASILIER, Henrik, SE-187 34 Täby (SE); RUNE, Göran, SE-582 52 Linköping (SE); MILDH, Gunnar, SE-192 55 Sollentuna (SE); VIKBERG, Jari, SE-153 38 Järna (SE)
(74) Representative: Ericsson
(86) International application number: PCT/SE2012/050547
(87) International publication number: WO 2013/176588

(56) References cited:
- "3rd Generation Partnership Project; Technical Specification Group Services and System Aspects; Architecture enhancements for non-3GPP accesses (Release 11)", 3GPP STANDARD; 3GPP TS 23.402, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V11.2.0, 8 March 2012 (2012-03-08), pages 1-251, XP050555360, [retrieved on 2012-03-08] cited in the application
- "3rd Generation Partnership Project; Technical Specification Group Services and System Aspects; Study on S2a Mobility based On GTP & WLAN access to EPC (SaMOG); Stage 2 (Release 11)", 3GPP STANDARD; 3GPP TR 23.852, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V1.0.0, 12 December 2011 (2011-12-12), pages 1-40, XP050554477, [retrieved on 2011-12-12]
- "3rd Generation Partnership Project; Technical Specification Group Services and System Aspects; IP flow mobility and seamless Wireless Local Area Network (WLAN) offload; Stage 2 (Release 10)", 3GPP STANDARD; 3GPP TS 23.261, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V10.2.0, 8 March 2012 (2012-03-08), pages 1-22, XP050555341, [retrieved on 2012-03-08]
- NEC ET AL: "Clarification of trusted WLAN access terminology and security considerations", 3GPP DRAFT; S2-114373_SAMOG-SECURITYFFS_V3, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Jeju Island; 20111010, 4 October 2011 (2011-10-04), XP050549545, [retrieved on 2011-10-04]

## Description

### TECHNICAL FIELD

The present disclosure relates to a mobile station, a wireless access point and to methods therein. In particular, it relates to handling of access for mobile stations to different wireless communications networks via a wireless access point.

### BACKGROUND

Today Wi-Fi is mainly used to offload traffic from the wireless communications networks, also denoted mobile networks or cellular networks. The opportunity to improve end user experience regarding performance is also becoming more important. Current Wi-Fi deployments are mainly totally separate from wireless communications networks, and are to be seen as non-integrated. The usage of Wi-Fi is mainly driven due to the free and wide unlicensed spectrum, and the increased availability of Wi-Fi in mobile terminals/stations like smart phones and tablets. End users are also becoming more and more at ease with using Wi-Fi for example at offices, hotels and homes.

The different business segments for Wi-Fi regarding integration possibilities can be divided into mobile operator hosted/controlled vs. 3rd party hosted/controlled Wi-Fi Access Points (APs). Here 3rd party is seen as anything else than mobile operator and that the 3rd party is not totally "trusted" by the mobile operator. 3rd party could be for example a Wi-Fi operator or an end-user him/herself. In both segments there exist public/hotspot, enterprise and residential deployments.

Wi-Fi integration towards the mobile core network is emerging as a good way to improve end user experience further. Such solutions consist mainly of the components: common authentication between 3GPP and Wi-Fi, and integration of Wi-Fi user plane traffic to the core of the wireless communications network. Common authentication is typically based on automatic Subscriber Identity Module (SIM)-based authentication in both access types. The Wi-Fi user plane integration gives an opportunity to provide the same services, like parental control and subscription based payment methods, for the end users when connected both via 3GPP and via Wi-Fi. Different solutions are being standardized in 3GPP, such as (and seen in **Fig**. **1**)**:** Overlay solutions (S2b, S2c) are specified since 3GPP Rel-8 while integration solutions (S2a) are currently work-in-progress (S2a, S2b, S2c indicating the 3GPP interface/reference point name towards the PDN-GW). These solutions are specified in 3GPP TS 23.402.

3GPP TR 23.852 relates to technology wherein a mobile station supports the preservation of IP-addresses when accessing e.g. Wi-Fi from a 3GPP network.

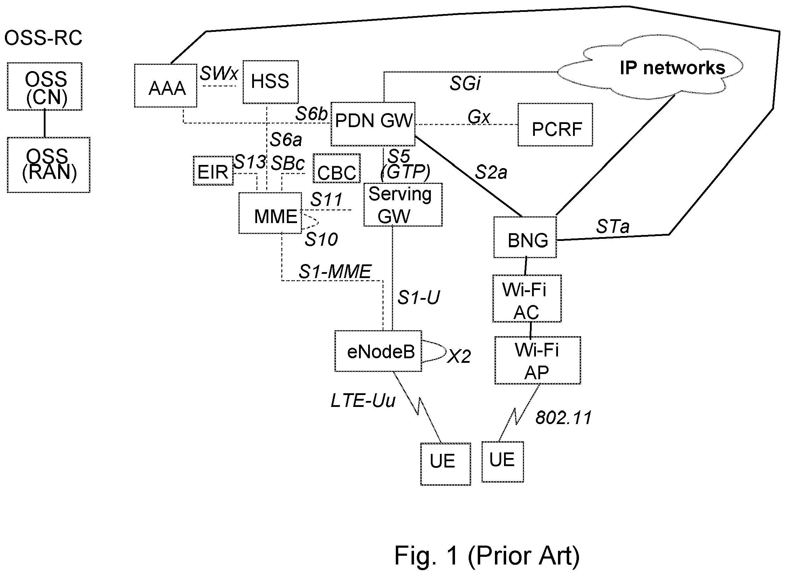

Fig. 1 shows the network architecture for Evolved UMTS Terrestrial Radio Access Network (E-UTRAN) and Evolved Packet Core (EPC) and how the eNodeB i.e. LTE base station, is connected via the S1-interfaces, S1-Mobility Management Entity (MME) and S1-U to the MME and Serving Gateway (GW) respectively. It also shows how the Wi-Fi access network is connected to the PDN-GW via the S2a interface and to the 3GPP AAA Server via the STa interface. The shown Wi-Fi access network is just an example deployment and contains a Wi-Fi Access Point (AP), Wi-Fi Access Controller (AC) and a Broadband Network Gateway (BNG). More detailed information may be found in standard documents.

Different standards organizations have started to recognize the needs for an enhanced user experience for Wi-Fi access, this process being driven by 3GPP operators. An example of this is the Wi-Fi Alliance with the Hot-Spot 2.0 (HS2.0) initiative, now officially called PassPoint. HS2.0 is primarily geared toward Wi-Fi networks. HS2.0 builds on the standard IEEE 802.11u, and adds requirements on authentication mechanisms and auto-provisioning support.

The momentum of Hot-Spot 2.0 is due to its roaming support, its mandatory security requirements and for the level of control it provides over the terminal for network discovery and selection. Current release of HS2.0 is not geared towards 3GPP interworking and there is therefore a need for trying to introduce additional traffic steering capabilities, leveraging HS2.0 802.11u mechanisms.

The HS2.0 contains the following procedures:
1 Discovery: where the terminal discovers the Wi-Fi networks, and probe them for HS2.0 support, using 802.11u and HS 2.0 extensions.
2 Registration is performed by the terminal toward the Wi-Fi Hot-spot network if there is no valid subscription for that network.
3 Provisioning: Policy related to the created account is pushed toward the terminal. This only takes place when a registration takes place.
4 Access: cover the requirements and procedures to associate with a HS2.0 Wi-Fi network.

The Access Network Discovery and Selection Function (ANDFS) is an entity defined by 3GPP for providing access discovery information as well as mobility and routing policies to the UE. The information and policies provided by the ANDSF may be subscriber specific.
i) Access Discovery Information is used to provide access discovery information to the UE, which can assist the UE to discover available (3GPP and) non-3GPP access networks without the burden of continuous background scanning.
ii) Inter-System Mobility Policies (ISMP) are policies which guide the UE to select the most preferable 3GPP or non-3GPP access. The ISMP are used for UEs that access a single access (3GPP or Wi-Fi) at a time,
iii) Inter-System Routing Policies (ISRP) are policies which guide the UE to select over which access a certain type of traffic or a certain APN shall be routed. The ISRP are used for UEs that access both 3GPP and Wi-Fi.

Typically different permanent UE identifiers, such as the International Mobile subscriber Identity (IMSI), are not used unless needed and different temporary identities are instead used. A permanent UE identity needs to be normally used for example at the first attach to the wireless communications network. After this a temporary UE identifier is allocated for the UE and the relation between the permanent and temporary UE identifiers is known in the wireless communications network, for example in the Core Network (CN).

IMSI is for example composed of three parts:
a Mobile Country Code (MCC) consisting of three digits. The MCC identifies uniquely the country of the mobile subscriber.
b Mobile Network Code (MNC) consisting of two or three digits. The MNC together with the MCC identifies the home PLMN of the mobile subscriber. The length of the MNC (two or three digits) depends on the value of the MCC.
c Mobile Subscriber Identification Number (MSIN) identifying the mobile subscriber within a PLMN

In the EPS the permanent identities are only known in the EPC and the E-UTRAN is only aware of temporary UE identities. An example is the Globally Unique Temporary UE Identity (GUTI) that uniquely identifies the MME which allocated the GUTI and also identifies the UE within the MME that allocated the GUTI. Another example used for paging purposes is the S-TMSI. GUTI and S-TMSI are also defined in 3GPP TS 23.003.

When the UE accesses a Wi-Fi network it can be authenticated using Extensible Authentication Protocol Method for GSM Subscriber Identity Module (EAP-SIM) or Extensible Authentication Protocol Method for UMTS Authentication and Key Agreement (EAP-AKA) protocols. The UE can in these cases be identified by either the full authentication Network Access Identifier (NAI) or by the fast re-authentication NAI. The full authentication NAI contains the IMSI of the UE and the fast re-authentication NAI is similar to the temporary identities used in LTE access in the sense that it is the 3GPP Authentication, Authorization, and Account (AAA) Server that knows the relation between the fast re-authentication NAI and the full authentication NAI.

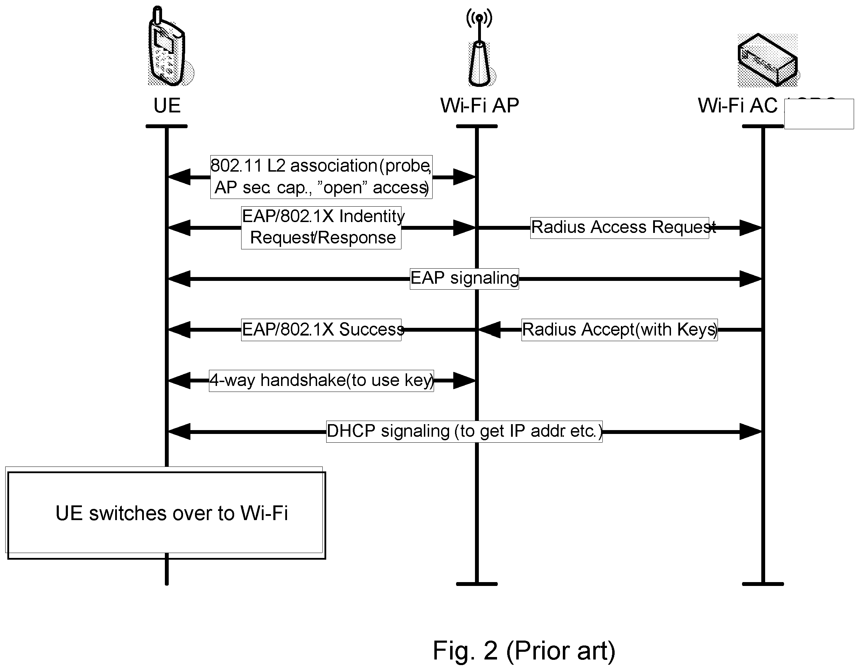

An example of the EAP signaling is shown in **Fig.2** for the case a UE accesses Wi-Fi AP. The different steps shown in Fig.2 are as following. The first step between the UE and the Wi-Fi AP is about creation the 802.11 Layer 2 association. Even though shown as a single step in Fig. 2, this part consists of multiple steps as defined in the different IEEE 802.11 specifications. The following three steps are about authenticating the UE using some EAP signaling protocols. One such example is the usage of EAP-SIM or EAP-AKA in which the (U)SIM card credentials in the UE are used to authenticate the UE attempt to access Wi-Fi. After this the 4-way handshake is performed in which the security keys, created as part of the EAP signaling, are activated. After this a DHCP signaling step is shown and this is step in which the UE requests on IP-address from the Wi-Fi network (this IP is further sometimes denoted "Wi-Fi allocated IP"-address). When all the preceding steps are successful the UE switches over to Wi-Fi.

Many solutions given above are for roaming from one wireless communications network to the other by switching between the wireless communications networks leading to a great amount of signaling mainly between different core network nodes.

Thus, there is a need for a combined LTE eNB and Wi-Fi AP deployment that may be used in a way that further optimizes the combination of these types of wireless communications networks and which solution(s) decreases the amount of signaling, especially during access procedure.

### SUMMARY

One object is therefore to limit the amount of signalling being performed between a first and a second wireless communications network in which mobile stations are served via one or more wireless access point.

In an example of embodiments the object is achieved by a method in a mobile station for handling access to different wireless communications networks via a wireless access point, the wireless access point supporting different wireless communications networks having different radio access technologies. The method comprises receiving, from the wireless access point using a first wireless communications network, a first indication of an available second wireless communications network. The method also comprises receiving, from the wireless access point using the first wireless communications network, a second indication. Additionally the method comprises determining whether the received second indication includes information of an address to be used by the mobile station when requesting access to the second wireless communications network, and when so being the case, requesting access to the second wireless communications network.

In yet an example of embodiments there is provided a mobile station for handling access to different wireless communications networks via a wireless access point. The wireless access point is being configured to support different wireless communications networks having different radio access technologies. The mobile station comprises a receiver circuit and a processor circuit. The receiver circuit is being configured to receive, from the wireless access point using a first wireless communications network, a first indication of an available second wireless communications network, and a second indication. The processor circuit being configured to determine whether the received second indication includes information of an address to be used by the mobile station when requesting access to the second wireless communications network, and when so being the case, request access to the second wireless communications network.

In yet an example of embodiments there is provided a method in wireless access point for handling access of mobile stations to different wireless communications networks, the wireless access point supporting different wireless communications networks having different radio access technologies. The method comprises transmitting, to the mobile station using a first wireless communications network, a first indication indicating availability of a second wireless communications network. Additionally the method comprises determining whether the mobile station is capable of handling information of an address to be used by the mobile station when requesting access to the second wireless communications network. The method then comprises, transmitting, to the mobile station, a second indication comprising the information of an address for use by the mobile station when requesting access to the second wireless communications network, when determined that the mobile station is capable of handling the information of an address.

In yet an example of embodiments there is provided a wireless access point for handling access of mobile stations to different wireless communications networks, the wireless access point being configured to support different wireless communications networks having different radio access technologies. The wireless access point comprises a transmitter circuit and a processor circuit. The transmitter circuit is configured to transmit, to the mobile station using a first wireless communications network, a first indication indicating availability of a second wireless communications network. The processor circuit configured to determine whether the mobile station is capable of handling information of an address to be used by the mobile station when requesting access to the second wireless communications network. The processor circuit is also configured to transmit, to the mobile station, a second indication comprising the information of an address for use by the mobile station when requesting access to the second wireless communications network, when determined that the mobile station is capable of handling the information of an address.

One advantage achieved by at least some of the above mentioned embodiments is the reduction of signalling in a combination of wireless communications networks.

Another advantage achieved by at least some of the above mentioned embodiments is simplified implementation in the wireless access point to enable the embodiments as the mobile station is made aware of the support of the functionality.

Finally, it is also advantageous that the mobile station gains knowledge about indications/identifiers used in the wireless communications networks that are supported in a same wireless access point as this enables the mobile station to prioritize selection between different wireless communications networks being supported by the same wireless access point.

Other objectives, advantages and novel features of aspects of the present disclosure will become apparent from the following detailed description of embodiments and aspects.

### BRIEF DESCRIPTION OF THE DRAWINGS

The embodiments are described in more detail with reference to attached drawings illustrating exemplary embodiments and in which:
- Fig. 1: is an illustration of a network architecture for a combined LTE/Wi-Fi network according to prior art.
- Fig. 2: is an illustration of a signalling scheme in a combined LTE/Wi-Fi network according to prior art.
- Fig. 3: is an illustration of network architecture according to example embodiments and aspects disclosed herein.
- Fig. 4: is an illustration of a signalling scheme in a combined LTE/Wi-Fi network according to some example embodiments and aspect disclosed herein.
- Fig. 5: is an illustration of a flowchart depicting example embodiments of a method in a mobile station.
- Fig. 6: is another illustration of a signalling scheme in a combined LTE/Wi-Fi network according to some example embodiments and aspect disclosed herein.
- Fig. 7: is an illustration of a flowchart depicting example embodiments of a method in a wireless access point.
- Fig. 8: is an illustration of a block scheme disclosing main parts of an example mobile station.
- Fig. 9: is an illustration of a block scheme disclosing main parts of an example wireless access point.

### DETAILED DESCRIPTION

Wi-Fi integration into Radio Access Network (RAN) is also emerging as an interesting study object. One concept is to provide a combined LTE eNB and Wi-Fi Access Point (AP) connected to a wireless/mobile core network via for example a S1 interface so that one Mobile Station (MS), also denoted User Equipment (UE), uses a single and same S1-interface while being connected to either the LTE or the Wi-Fi access. The combined LTE eNB and Wi-Fi AP may further provide an indication to the MS/UE about this arrangement informing the MS/UE of available wireless communications networks and indicating the support for use of address mapping. The indication may be provided via either the Wi-Fi AP part or the LTE eNB part. In addition, new indications about the identities of the LTE and Wi-Fi interfaces are included. For example, that the LTE interface contains information that identifies the Wi-Fi interface of the same combined LTE eNB and Wi-Fi.

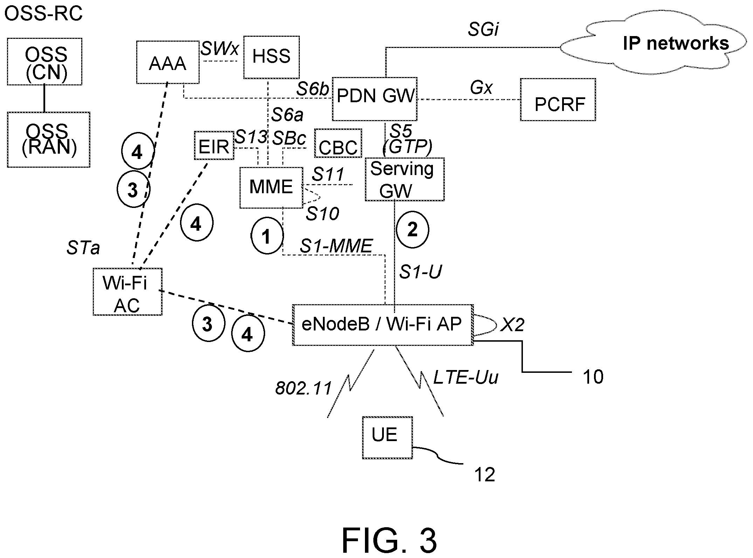

In **Fig 3** there is shown example architecture of a combined first Wireless Communication Network (WCN) and second WCN wherein each node and its functionality are more explained in detail. The term wireless communications network is here used to point out that the network is mainly accessed by mobile stations and UEs, and which includes a Radio Access Network (RAN) or a wireless access point. The first WCN is here also a mobile communication network, which as an example is an Evolved Packet System (EPS) network. This first WCN comprises a number of network nodes. It comprises a Mobility Management Entity (MME) node, a Home Subscriber Server (HSS) node, a serving gateway node and a Packet Data Network (PDN) gateway node. The second wireless communication network is here illustrated as a wireless local area network (WLAN). The second communication network comprises an access control node part and an Authentication Authorization, Accounting (AAA) server. It should here be realized that it is possible with further nodes in both the WCNs. However, these have been omitted or not discussed further in order to provide a clearer and simple description.

Continuing with the description of Fig. 3, there are further a combined wireless access point **10** able to communicate wirelessly according to both the Wi-Fi and the LTE standard when communicating with a mobile station **20**, hereinafter denoted UE or MS with equal meaning. This is achieved by the wireless access point 10 using both a first type of wireless communication in a first wireless communication mode LTE-Uu of LTE and a second type of wireless communication in a second wireless communication mode 802.11 of Wi-Fi, where 802.11 is the wireless communication mode specified in the standard IEEE 802.11, or in different other related specifications such as the HotSpot 2.0 specification. Thus when a combined LTE eNB and Wi-Fi AP is connected to the mobile core network via a S1 interface then the UE 20 uses a single and same S1-interface while being connected to either the LTE or the Wi-Fi access. It is worth mentioning that the MS may be capable of being connected to both accesses at the same time, or that it may be capable of being connected to a single access at any time. Roaming/handover between the two different WCNs is done by based on an address mapping/association procedure e.g. IMSI mapping. The mapping/association of the UE 20 in the different LTE and Wi-Fi air interfaces may be done based on a so called S1-proxy function. Following will the IMSI retrieval function and the S1 proxy function be described in more detail.

### IMSI retrieval procedures:

One specific area that needs to be solved for is therefore retrieval of IMSI to the LTE eNB part of the wireless access point 10. Different solutions are described for this in the following. The IMSI is needed as common identifier used in both the LTE and Wi-Fi parts of the combined wireless access point to be able to identify and map/associate flows belonging to one UE 20 on the different accesses i.e. LTE and Wi-Fi. This is needed so that the user plane packets received over Wi-Fi may be injected to correct GPRS Tunnelling Protocol (GTP)-U tunnels in the S1-U interface in the uplink, and same applies also in the downlink direction.

Fig. 3 further shows main principles for how the IMSI could/would be retrieved to the LTE eNB side of the combined LTE eNB and Wi-Fi AP. Number **1** is a case illustrating/indicating that the IMSI may be sent from the MME to the eNB AP part on a S1-MME interface. Basically, S1AP-procedures would be extended with the MME including the IMSI for example in UE context setup procedures.

Case marked as number **2** illustrates/indicates the case when the IMSI is included in the S1-U interface signalling, for example in some GTP-U header extension field from the SGW down to the eNB AP part. The PDN-GW may include the IMSI in this case in downlink messages in case of GTP-based S5-interface (GTP-U header extension field) and the SGW would merely copy the information over to the S1-U interface.

Fig. 3 also shows the case for how the IMSI may be made available in the Wi-Fi side of the combined LTE eNB and Wi-Fi AP 10. However, in the simplest case, when the EAP-SIM/AKA authentication is based on IMSI identity (such as the full authentication NAI), then the IMSI is already available in the Wi-Fi AP part. In a case when fast re-authentication identities are used then it is the AAA server that knows the association between an IMSI and a fast re-authentication identity. In this case the AAA server could/would inform an authenticator such as the Wi-Fi AC, about the IMSI and the Wi-Fi AC may forward the information to the Wi-Fi AP part. Number 3 in the figure shows this case. However, this part itself is not enough as it only results in the IMSI being known in the Wi-Fi AP part of the combined node i.e. the combined wireless access point 10. Therefore this solution must be used together with any of, or both, the solutions described as Numbers 1 and 2 in Fig. 3.

Still another alternative, shown as Number **4** in Fig. 3 is that the Wi-Fi AC, as the authenticator, contacts an MME that the UE 20 is attached to, based on the IMSI. This may be achieved by the Wi-Fi AC or the AAA server contacting a Home Subscriber Server (HSS) and asking the HSS about a serving MME for the UE 20. In the latter case the AAA server would then inform the Wi-Fi AC about the serving MME. Then the Wi-Fi AC contacts the serving MME with the IMSI and asks for the temporary identities used currently for the UE in the LTE side. Once Wi-Fi AC gets this information, it forwards it to the Wi-Fi part/side of the combined LTE eNB and Wi-Fi AP 10 and then it is possible to combine together the UE context in both LTE and Wi-Fi sides. This solution may be seen as a standalone solution i.e. the solutions described as Numbers 1 and 2 in Fig. 3 may not be needed in this case. The solution described as number 3 may be needed depending on if IMSI is used as the EAP-SIM/AKA authentication identity or not. If IMSI is not used then the solution described as number 3 may also be used in the case for which the Wi-Fi AC contacts the HSS and MME for identity/address information. Another possibility would be that the Wi-Fi sends the fast re-authentication NAI and the IMSI in the LTE side to the combined LTE eNB and Wi-Fi AP 10 and then it is possible to combine together the UE context in both LTE and Wi-Fi sides based on this information.

Based on the described cases, numbered 1-4, above the combined LTE eNB and Wi-Fi AP 10 is able to associate/map the LTE and Wi-Fi traffic belonging to one MS/UE 20.

### The S1-proxy function:

S1-proxy function is also part of the combined LTE eNB and Wi-Fi AP 10. The S1-proxy function handles the associations/mappings between the different identities/addresses used in the LTE and Wi-Fi sides and performs needed Network Address Translation (NAT) functionality when the Wi-Fi user plane traffic is injected to the GTP-U tunnel. The identifiers used are Wi-Fi MAC address, NAT information and state, UEs IP addresses in the CN and IMSI among others.

When the UE 20 sends traffic via LTE radio interface, the S1-proxy function is not doing anything. The LTE eNB operation is as normally and the user plane traffic is injected to the GTP-U tunnel towards the serving GW. However, when the UE sends traffic via the Wi-Fi radio interface the S1-proxy function starts.

When the UE 20 was attached to the LTE eNB-side, it was allocated an IP-address in the selected PDN-GW. This IP-address is called CN-allocated-IP. At least one GTP-U tunnel was also allocated for the UE identified by Tunnel Endpoint ID (TEID) and Serving GW-GTP-IP-Address and eNB-IP-Address. When the UE was attached to the Wi-Fi side, it was allocated also another IP-address for example by the Wi-Fi AC or in some cases by the Wi-Fi AP part. This IP-address is called Wi-Fi-allocated-IP. Basic identifiers used by the S1-proxy are the following: IMSI; S-TMSI; Wi-Fi MAC address; Wi-Fi-allocated-IP-address; CN-allocated-IP-address.

One purpose of the S1-proxy is therefore to inject the user plane traffic received via the Wi-Fi air interface to one of the GTP-U tunnels towards the Serving GW. Same behavior applies also in the downlink direction i.e. some part of the traffic received on a GTP-U tunnel is sent to the UE via the Wi-Fi air interface. Thus, the S1-proxy function performs the following functions:
- In the uplink direction wherein the source IP-address, is the Wi-Fi-allocated-IP received in the IP packets from the UE 20, needs to be changed to the CN-allocated-IP address with a NAT-function.
- In the downlink direction wherein the destination IP-address, is the CN-allocated-IP in the IP packets received from the Serving GW, needs to be changed to the Wi-Fi-allocated-IP with a NAT-function.

Another specific area that needs to be described is handover between different combined LTE eNB and Wi-Fi APs. New information needs to be forwarded from the source wireless access point to the target wireless access point to enable the S1-proxy function also in the target side. The "S1-Proxy information" may be provided from the source eNB AP part to the target eNB AP part as part of X2AP Handover preparation phase. The information could also be included in a S1-interface based handover preparation phase, for example as part of RAN transparent container information elements or as a separate information element.

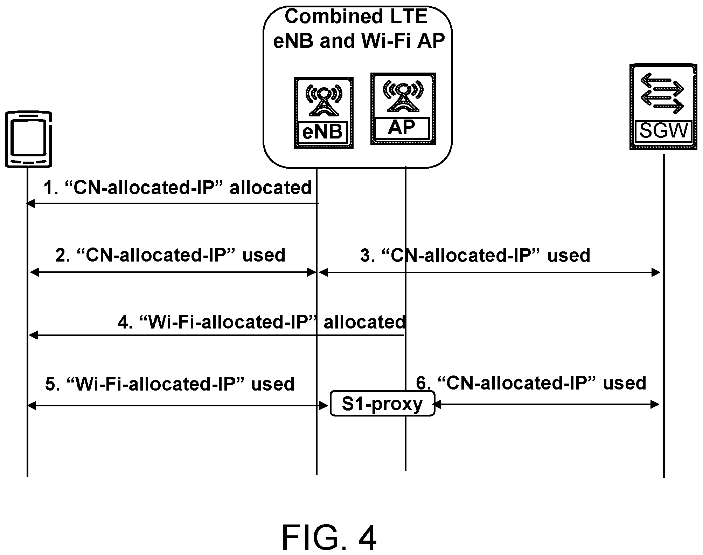

Fig. **4** is an example of a signaling scheme illustrating the signaling between the UE 20 and the combined wireless access point 10, hereinafter only denoted wireless access point. The UE 20 will receive **1** one IP-address from the LTE network, described earlier as CN-allocated-IP, and use **2,** via the eNB part handling **3** the communications, this address in the LTE network. Another IP-address from Wi-Fi network, described earlier as Wi-Fi-allocated-IP, will then be provided **4** to the UE 20 based on for example the principles shown in Fig. 2. Those IP-addresses are then used in the corresponding LTE and Wi-Fi interfaces as well. The S1-proxy function in the combined LTE eNB and Wi-Fi AP 10 will then perform the needed IP-address translation **5** (NAT) from the Wi-Fi-allocated-IP to the CN-allocated-IP before the traffic is forwarded **6** toward the core network. It is worth mentioning that the UE may be capable of being connected to both accesses at the same time, or that it may be capable of being connected to a single access at any time.

However, it would be beneficial for the UE to know that it could continue using the IP-address assigned from the LTE network (i.e. the CN-allocated-IP) also over the Wi-Fi interface. This would also be beneficial on the combined node side as this would more or less also eliminate the need for the NAT functionality in the S1-proxy function.

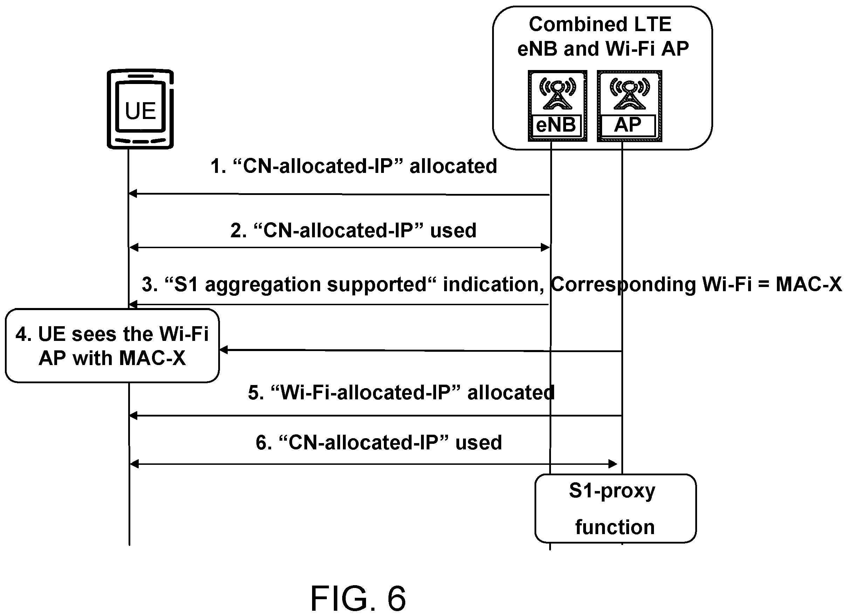

One principle to support such an arrangement is that the combined LTE eNB and Wi-Fi AP 10 provides an additional indication to the UE 20 about the support of the architecture/arrangement described in this document. Based on this indication the UE can continue to use the LTE IP address over the Wi-Fi link as well. This may either be based on the Wi-Fi network returning the CN-allocated-IP to the UE via DHCP, or that the UE starts using this IP address merely based on the indication. This indication may for example be called for "S1 aggregation supported". Fig. 6 will further down illustrate the procedure of mapping/associating addresses or address info.

Seen from the UE/MS side as illustrated by **Fig**. **5**, there is provided a method in a mobile station/UE 20 for handling access to different WCNs via the wireless access point 10, the wireless access point supporting different WCNs having different radio access technologies (LTE and WiFi). The method comprises receiving **S100**, from the wireless access point using a first WCN (LTE), a first indication of an available second WCN (WiFi). This need not always necessary has to be the first step. Again the first indication may be sent out together with initially sending out the IP-address of the first WCN (LTE), i.e. serving first WCN.

Following above the method comprises receiving **S110**, from the wireless access point 10 using the first WCN (LTE), a second indication wherein the second indication includes information of an address to be used for requesting access to the second WCN. The information may also relate to the S1 aggregation supported indication or at least comprise an indicator of S1 aggregation support. Also, the wireless access point may for example indicate that the MS/UE 20 should proceed using the address for the second WCN as well. In one embodiment, it does not have to be indicated to the mobile station 20 that the wireless access point 10 is going to tunnel packets/information/data using the first communications network. In an alternative embodiment, the MS is informed of the functionality of the wireless access point and the identities of both or either of the first and second WCNs. This to make sure that the MS 20 is informed of the combined functionality of the wireless access point 10 and about which LTE and Wi-Fi networks it supports, simultaneously or not. According to one embodiment the method comprises requesting **S112,** from the wireless access point, the second indication. The method may further comprise requesting and receiving other indications/indicators at any time after receiving the first indication or together with the received first indication.

For example the method may comprise requesting/receiving **S114** a third indication comprising an identity of the first WCN and/or an identity of the second communications network supported by the wireless access point. For example, when indication (third indication) is received via the LTE interface, the LTE interface would need to indicate which Wi-Fi AP is part of the combined node, for example the Wi-Fi MAC-address of the wireless access point 10. Otherwise there is a (theoretical) risk that the UE is connected to another Wi-Fi AP that is not part of the combined node and in this case the UE should not continue behaving as it would still be connected to the one combined LTE eNB and Wi-Fi AP. Similar need arises also for the case when the indication (third indication) is provided via the Wi-Fi interface.

Another example is that the method may comprise requesting/receiving **S116** a capacity indicator from the wireless access point indicating the second WCN as a higher priority WCN.

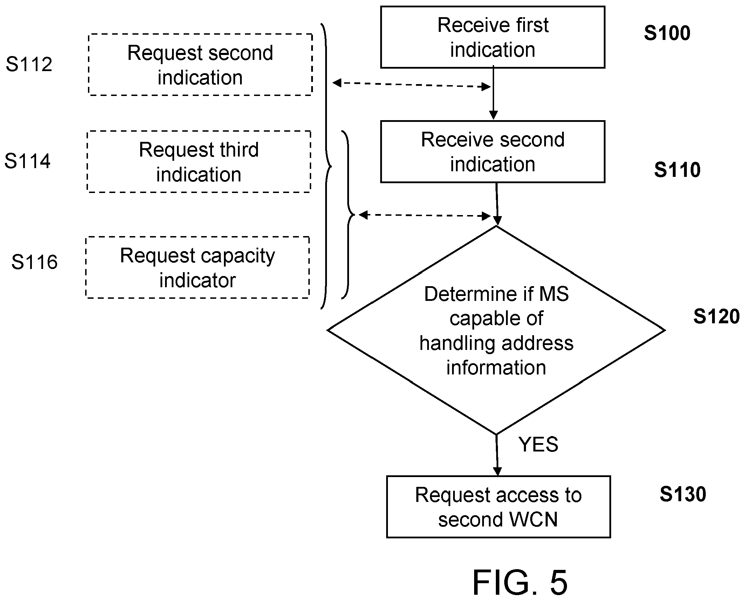

Additionally the method comprises determining **S120** whether the received second indication includes information of an address to be used by the mobile station when requesting access to the second WCN. When determined that the mobile station is capable i.e. supports the procedure, of handling address info, marked with yes in Fig. 5, the method then comprises requesting **S130** access to the second WCN. In the case the mobile station is determined not to support address information handling, then normal procedure for roaming or handover between WCN is followed, not shown in Fig. 5. The determining S120 may comprise determining whether the received second indication comprises information of an address to be used by the mobile station when requesting access to the second WCN and wherein the information is about an address already used for communications with the first WCN. The mobile station, e.g. 20, may send a response to the wireless access point e.g. 10, to inform that it supports the procedure of address information handling. The requesting S130 may comprise requesting access to the second WCN using a same address as in communications with the first WCN or an address mapped/associated with an address that is already in use for communications with the first WCN.

In case of the first WCN is a LTE network then the first, second, or third indication, in a system information message, or in a dedicated resource of a signalling for example using any of the MAC, RRC or PDCP protocols over any radio channels defined for LTE. If on the other hand the first WCN is a WiFi network and the second WCN is an LTE network or an enhanced LTE network then the first, second, or third indication, by use of a Dynamic Host Configuration Protocol, DHCP, or by use of 802.11u or HotSpot 2.0 or PassPoint signalling. Note that any other received, requested or not, indicator or indication may also be received on same control channels as the ones described herein.

**Fig**. **6** shows an example of the case when the second indication, comprising a "S1 aggregation supported" indication, is provided in the LTE interface, and that the LTE interface also contains information that identifies the Wi-Fi interface in the combined wireless access point/node 10. Also in this case, as in the one discussed in relation to Fig. 4, it is the UE that based on the received **1** indication-allocated-IP uses **2** this indication/address when communicating with the wireless access point according to a first WCN technology i.e. LTE. The UE 20 then receives **3** another indication of S1-aggregation-support and still another indication about the MAC-address of the wireless access point 10 in the Wi-Fi side from the wireless access point 10. The UE 20 will thus use **4** the received MAC-address when being connected to, or connecting, via the Wi-Fi interface of the combined wireless access point. Another IP-address from Wi-Fi network, described earlier as "Wi-Fi-allocated-IP", may then be provided **5** to the UE 20 for example based on the principles shown in Fig. 2. Those IP-addresses may then be used **6** in the corresponding LTE and Wi-Fi interfaces as well since mapping is already performed by the wireless access point or by aid of the core network. The UE may in some case be ordered to use a certain address for connecting to one of the first and second WCN (LTE, Wi-Fi), for example the UE may use 5 the "CN-allocated-IP" address over the Wi-Fi interface based on any of the received indications. The UE 20 may also be simultaneously connected to both networks using either one or both addresses received. S1-proxy tunneling may be employed by the wireless access point here to tunnel communications according to one communications technology through the other communications technology i.e. Wi-Fi communication may be tunneled through the LTE network.

However, it is important to highlight that embodiments disclosed in relation to Fig. 6 may also be used in other cases. For example, the indications about LTE and Wi-Fi interfaces being part of the same combined wireless access point/node 10 could/would impact the Wi-Fi AP selection in the UE 20 so that the UE 20 could/would prefer to stay connected to different accesses in the combined wireless access point/node. Another example is any network logic that could be placed in the combined wireless access point/node 10 and that the UE 20 would need to know when it may use the corresponding functionality. An example of such functionality is MultiPath TCP (MPTCP) proxy in the combined wireless access point so that the different TCP sessions are over LTE and Wi-Fi interfaces. As long as the UE 20 would be connected to the interfaces towards the same combined wireless access point 10, it should continue using the MPTCP functionality.

**Fig**. **7** is an illustrating flowchart of a method in a wireless access point according to some embodiments disclosed herein. The wireless access point may be the wireless access point 10 mentioned earlier. The method is for handling access of mobile stations, such as the mobile station 20, to different WCNs e.g. LTE, Wi-Fi. The method comprises detecting **S200**, for a mobile station using a first WCN e.g. LTE, availability of a second WCN e.g. Wi-Fi. The mobile station e.g. mobile station/UE 20, may be served by the first WCN and communicating with the first WCN according to first type of interface and technology. The WCNs may be considered as networks with different Radio Access Technologies (RATs). The detecting 200 may be seen as an optional step/act. One main reason for that is that is may be a predefined detecting of a periodic event initiating a broadcast transmission to all UEs being served in a cell. Note, the AP would not specifically need to "detect" that a MS may have another "WCN" available, but just detect an initiation of the broadcast. Thus, according to alternative embodiments, the detecting is not MS specific. The indication(s) may for example be sent out in the system information that is broadcasted in the cell and that are not MS/UE-specific. The detecting 200 is marked in dashed lines to point out that this step/act is optional in combination with any other embodiment disclosed herein.

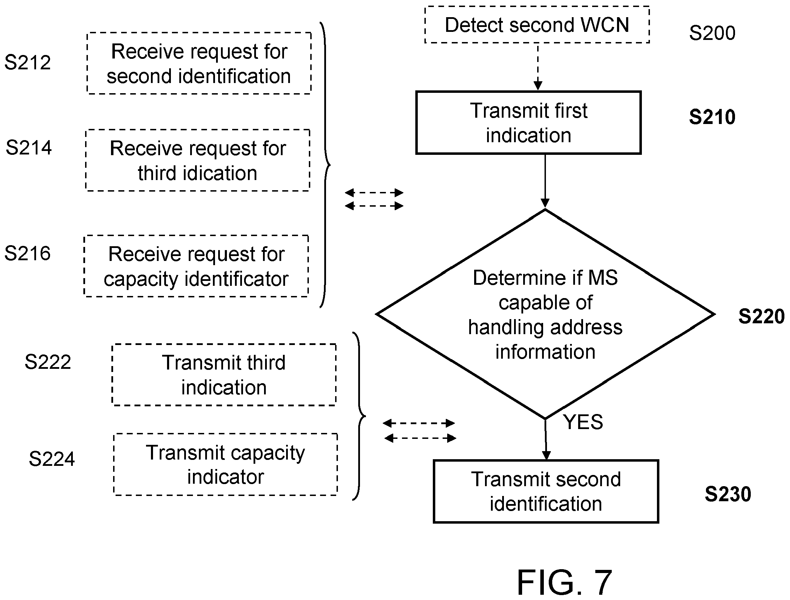

Referring back to Fig. 7, the method comprises transmitting **S210**, to the mobile station using the first WCN, a first indication indicating the availability of the second WCN. This may show up on the mobile station as an indicator on the screen or may be invisible for an end user i.e. an automatic procedure for network optimization.

The wireless access point may then receive a request for a second indication from the mobile station or determine **S220** on its own, whether the mobile station is capable of handling information of an address to be used by the mobile station when requesting access to the second WCN. The determining step(s)/act(s) may be performed according to a mapping procedure as mentioned earlier i.e. mapping a temporary address towards stored address information. The mapping may be such as a TMSI is mapped to a stored IMSI etc. According to one aspect, the mapping, which may also be seen as an address association procedure, is performed locally in the wireless access point which retrieves all necessary address(s) or address(s) information from other networks nodes. According to another aspect, the mapping/association is requested from the wireless access point and another network node performs the mapping/association and sends a result to the wireless access point.

When determining that the mobile station may handle the address information, based on the above mapping/association procedure and/or based on address information and/or support indication received from the mobile station, the wireless access point then transmits **S230** a second indication to the mobile station. Also the method may comprise receiving a request, from the mobile station, for the second indication and/or third indication **S212** and **S214** as seen from Fig. 5 steps/acts marked S112 and S114. Also the capacity indicator as well as other indicator(s) may have been requested **S216** for by the mobile station. The second indication comprises the information of an address for use by the mobile station when requesting access to the second WCN. If the wireless access point determines that the mobile station does not support address information handling e.g. the mobile station does not support tunnelling of information or no IMSI could be find for the mobile station, the wireless access point performs normal procedure for handover if so requested.

Referring back to Fig. 7, the method may comprise transmitting **S222** a third indication to the mobile station comprising an identity of the first WCN and/or an identity of the second communications network supported by the wireless access point.

**Fig**. **8** is an illustration of a block scheme disclosing main parts of an example mobile station such as the mobile station 20. The mobile station 20 includes parts and circuits configured for handling/performing any of the steps/acts of the corresponding method(s) disclosed and explained in relation to Fig. 5.

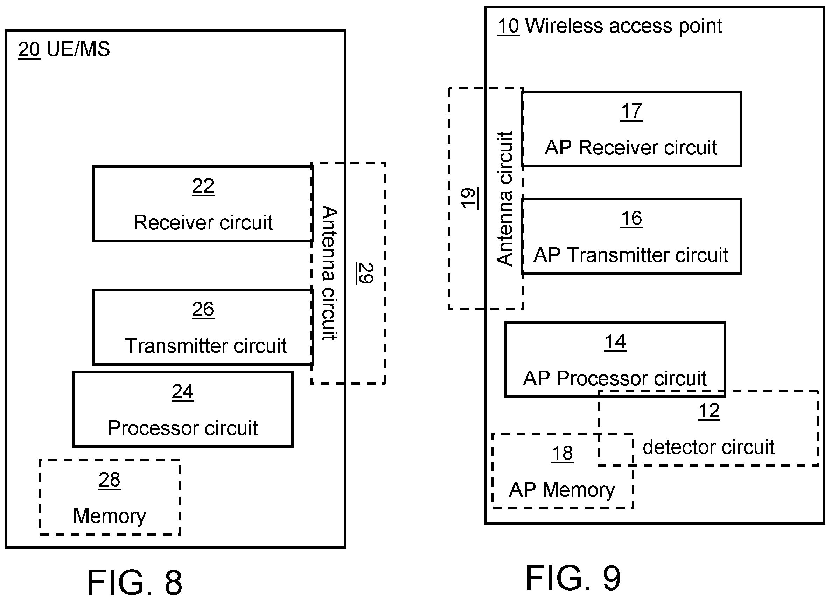

Referring back to Fig. 8, the mobile station 20 is configured for handling access to different WCNs via a wireless access point such as the wireless access point 10. The wireless access point 10 is configured to support different WCNs having different radio access technologies. The mobile station 20 comprises a receiver circuit **22**, a processor circuit **24**, a transmitter circuit **26,** a memory **28** and antenna circuit(s) **29** etc, and other parts omitted from Fig. 8 for simplicity.

The receiver circuit 22 is configured to receive, from the wireless access point using a first WCN, a first indication of an available second WCN, and a second indication. The receiver circuit 22 is configured to receive a third indication from the wireless access point comprising an identity of the first WCN and/or an identity of the second communications network supported by the wireless access point. This third indication is used to indicate the other WCN supported by the combined wireless access point, in order to avoid that the mobile station handing over to a wireless access point other than the serving one.

The processor circuit 24 configured to determine whether the received second indication includes information of an address to be used by the mobile station when requesting access to the second WCN; and when so being the case, request access to the second WCN. The processor circuit 24 may determine whether the received second indication comprises information of an address to be used by the mobile station when requesting access to the second WCN and wherein the information is about an address already used for communications with the first WCN. The processor circuit 24 may be a Central Processor Unit (CPU) or any other unit with similar functionality. Also the processor circuit 26 may be configured to request access to the second WCN, via the transmitter circuit, using a same address as in communications with the first WCN.

The transmitter circuit 26 is configured to transmit a request, to the wireless access point, for the second indication. The transmitter circuit 26 may be configured to transmit request(s) for other indication(s) or indicator(s) at any time after receiving the first indication.

Fig. 9 is an illustration of a block scheme disclosing main parts of an example wireless access point such as the wireless access point 10. The wireless access point includes parts and circuits configured for handling/performing any of the steps/acts of the corresponding method(s) disclosed and explained in relation to Fig. 7.

Referring back to Fig. 9, the wireless access point 10 is configured for handling access of mobile station(s) to different WCNs, and to support different WCNs having different RATs and/or different access interfaces. The wireless access point comprising a detector circuit **12**, an Access Point (AP) processor circuit **14**, an AP transmitter circuit **16**, an AP receiver circuit **17**, a AP memory **18** and AP antenna circuit(s) **19** etc, and other parts omitted from Fig. 9 for simplicity.

The detector circuit 12 may be configured to detect, for a mobile station using a first WCN, availability of a second WCN. Alternatively, the detector circuit 12 may be configured to detect an initiating event, that may for example be time based i.e. periodic within a certain predefined time, and then broadcast its capability and the wireless communications networks it supports. The broadcasting would be done in a served cell to all mobile stations. Other types of broadcasting may also be similarly used such as multicasting to specified mobile station groups.

The AP transmitter circuit 16 is configured to transmit to the mobile station using the first WCN, a first indication indicating the availability of the second WCN. The AP transmitter circuit 16 may be configured to transmit a third indication to the mobile station comprising an identity of the first WCN and/or an identity of the second WCN supported by the wireless access point. Additionally, the AP transmitter circuit16 may be configured to transmit a capacity indicator to the mobile station indicating the second WCN as a higher priority WCN.

The AP processor circuit 14 is configured to determine whether the mobile station is capable of handling information of an address to be used by the mobile station when requesting access to the second WCN. When so being the case, the AP processor circuit 14 then transmits, to the mobile station, a second indication comprising the information of an address for use by the mobile station when requesting access to the second WCN. Note that, the AP processor circuit 14 may transmit via use of the AP transmitter circuit 16, i.e. by ordering or requesting the AP transmitter circuit 16.

The AP receiver circuit 17 configured to receive a request, from the mobile station, for the second indication and/or third indication. The AP receiver circuit 17 may receive the request for several indications and/or indicators or receive several requests each for one or more indications and/or indicators.

Further, it is to be noted that some of the described circuits/circuitries above in relation to any of Fig. 8 and/or Fig. 9 comprised within the mobile station 20 or the wireless access point 10 are to be regarded as separate logical entities but not with necessity separate physical entities.

The methods in Fig. 5 and Fig. 7 for use in a mobile station and for use in a wireless access point, respectively, may further be implemented through one or more processor circuits/circuitries together with computer program code for performing the functions of the method(s) disclosed herein. Thus a computer program product, comprising instructions for performing the method(s) may assist, when the computer program product is loaded into or run in the mobile station 20 or in the wireless access point 10. The computer program product mentioned above may be provided for instance in the form of a data carrier carrying computer program code for performing the method(s). The data carrier may be e.g. a hard disk, a CD ROM disc, a memory stick, an optical storage device, a magnetic storage device or any other appropriate medium such as a disk or tape that can hold machine readable data. The computer program code can furthermore be provided as program code on a server or in a (radio) network node and downloadable to the mobile station 20 and/or to the wireless access point remotely, e.g. over an Internet or an intranet connection.

When using the formulation "comprise" or "comprising" it is to be interpreted as nonlimiting, i.e. meaning "consist at least of". The present invention is not limited to the above described preferred embodiments. The term configured to may be equally exchangeable with being adapted to and is considered to have the same meaning. Various alternatives, modifications and equivalents may be used. Therefore, the above embodiments are not to be taken as limiting the scope of the present invention, which is defined by the appending claims.

## Claims

1. A method performed by a mobile station (20) for handling access to different wireless communications networks via a wireless access point (10), the wireless access point supporting different wireless communications networks having different radio access technologies, the method comprises:
- receiving (S100), from the wireless access point using a first wireless communications network, a first indication of an available second wireless communications network;
- receiving (S110), from the wireless access point using the first wireless communications network, a second indication;
- determining (S120) whether the received second indication includes information of an address to be used by the mobile station when requesting access to the second wireless communications network; and when so being the case,
- requesting (S130) access to the second wireless communications network.

2. The method performed by a mobile station according to the preceding claim, wherein the method comprises receiving a third indication from the wireless access point comprising an identity of the first wireless communications network and/or an identity of the second communications network supported by the wireless access point.

3. The method performed by a mobile station according to any of the preceding claims, wherein the method comprises requesting (S 112), from the wireless access point, the second indication.

4. The method performed by a mobile station according to any of the preceding claims, wherein the determining comprises determining whether the received second indication comprises information of an address to be used by the mobile station when requesting access to the second wireless communications network and wherein the information is about an address already used for communications with the first wireless communications network.

5. The method performed by a mobile station according to any of the preceding claims, wherein the method comprises receiving a capacity indicator from the wireless access point indicating the second wireless communications network as a higher priority wireless communications network.

6. The method performed by a mobile station according to any of the preceding claims, wherein the requesting comprises requesting access to the second wireless communications network using a same address as in communications with the first wireless communications network.

7. The method performed by a mobile station according to any of the preceding claims, wherein the first wireless communications network is a Long Term Evolution, LTE, network or an enhanced LTE network and the second wireless communications network is a Wi-Fi network.

8. The method performed by a mobile station according to any of the preceding claims, wherein the method comprises receiving from the wireless access point a functionality indicator indicating that the wireless access point supports simultaneous sessions over the first wireless communications network and over the second wireless communications network.

9. A mobile station (20) for handling access to different wireless communications networks via a wireless access point, the wireless access point (10) being configured to support different wireless communications networks having different radio access technologies, the mobile station (20) comprising:
- receiver circuit (22) configured to receive, from the wireless access point using a first wireless communications network, a first indication of an available second wireless communications network, and a second indication;
- a processor circuit (24) configured to determine whether the received second indication includes information of an address to be used by the mobile station when requesting access to the second wireless communications network; and when so being the case, request access to the second wireless communications network.

10. A method performed by a wireless access point (10) for handling access of mobile stations to different wireless communications networks, the wireless access point supporting different wireless communications networks having different radio access technologies, the method comprises:
- transmitting (S210), to the mobile station using a first wireless communications network, a first indication indicating an availability of a second wireless communications network;
- determining (S220) whether the mobile station is capable of handling information of an address to be used by the mobile station when requesting access to the second wireless communications network; and when so being the case,
- transmitting (S230), to the mobile station, a second indication comprising the information of an address for use by the mobile station when requesting access to the second wireless communications network.

11. The method according to the preceding claim, wherein the method comprises detecting (S200), for a mobile station using a first wireless communications network, availability of a second wireless communications network.

12. The method performed by a wireless access point according to any of claims 10 or 11, wherein the method comprises transmitting (S222) a third indication to the mobile station comprising an identity of the first wireless communications network and/or an identity of the second communications network supported by the wireless access point.

13. The method performed by a wireless access point according to any of claims 10 to 12, wherein the method comprises receiving (S212) a request, from the mobile station, for the second indication and/or third indication.

14. The method performed by a wireless access point according to any of the claims 10 to 13, wherein the determining comprises determining based on an address mapping procedure whether the mobile station, using the first communications network, is capable of accessing the second wireless communications network.

15. The method performed by a wireless access point according to the preceding claim, wherein the address mapping procedure is based on mapping and/or associating an address of the mobile station used for accessing the second wireless communications network with an address of the mobile station stored and used in communications with the first wireless communications network.

16. The method performed by a wireless access point according to any of the claims 10 to 15, wherein the method comprises transmitting (S224) a capacity indicator to the mobile station indicating the second wireless communications network as a higher priority wireless communications network.

17. The method performed by a wireless access point according to any of claims 10 to 16, wherein the first wireless communications network is a Long Term Evolution, LTE, network or an enhanced LTE network and the second wireless communications network is a Wi-Fi network.

18. The method performed by a wireless access point according to any of the preceding claims, wherein the method comprises transmitting a functionality indicator indicating that the wireless access point supports simultaneous sessions over the first wireless communications network and over the second wireless communications network.

19. A wireless Access Point, AP, (10) for handling access of mobile stations to different wireless communications networks, the wireless AP (10) being configured to support different wireless communications networks having different radio access technologies, the wireless AP comprising:
- an AP transmitter circuit (16) configured to transmit, to the mobile station (20) using a first wireless communications network, a first indication indicating an availability of a second wireless communications network;
- an AP processor circuit (14) configured to determine whether the mobile station is capable of handling information of an address to be used by the mobile station when requesting access to the second wireless communications network; and when so being the case,
- transmit, to the mobile station, a second indication comprising the information of an address for use by the mobile station when requesting access to the second wireless communications network.

## Patentansprüche

1. Verfahren, das durch eine Mobilstation (20) durchgeführt wird, und zwar zum Handhaben des Zugangs zu unterschiedlichen drahtlosen Kommunikationsnetzwerke über einen drahtlosen Zugangspunkt (10), wobei der drahtlose Zugangspunkt unterschiedliche drahtlose Kommunikationsnetzwerke mit unterschiedlichen Funkzugangstechnologien unterstützt, wobei das Verfahren umfasst:
- unter Verwendung eines ersten drahtlosen Kommunikationsnetzwerks erfolgendes Empfangen (S100) eines ersten Hinweises auf ein verfügbares zweites drahtloses Kommunikationsnetzwerk vom drahtlosen Zugangspunkt;
- unter Verwendung des ersten drahtlosen Kommunikationsnetzwerks erfolgendes Empfangen (S110) eines zweiten Hinweises vom drahtlosen Zugangspunkt;
- Bestimmen (S120), ob der empfangene zweite Hinweis Information über eine Adresse einschließt, die durch die Mobilstation zu verwenden ist, wenn sie Zugang zum zweiten drahtlosen Kommunikationsnetzwerk anfordert; und wenn dies der Fall ist,
- Anfordern (S130) von Zugang zum zweiten drahtlosen Kommunikationsnetzwerk.

2. Verfahren nach dem vorhergehenden Anspruch, das durch eine Mobilstation durchgeführt wird, worin das Verfahren umfasst: Empfangen eines dritten Hinweises vom drahtlosen Zugangspunkt, der eine Identität des ersten drahtlosen Kommunikationsnetzwerks und/oder eine Identität des zweiten drahtlosen Kommunikationsnetzwerks, das durch den drahtlosen Zugangspunkt unterstützt wird, umfasst.

3. Verfahren nach einem der vorhergehenden Ansprüche, das durch eine Mobilstation durchgeführt wird, worin das Verfahren umfasst: Anfordern (S112) des zweiten Hinweises vom drahtlosen Zugangspunkt.

4. Verfahren nach einem der vorhergehenden Ansprüche, das durch eine Mobilstation durchgeführt wird, worin das Bestimmen umfasst: Bestimmen, ob der empfangene zweite Hinweis Information über eine Adresse einschließt, die durch die Mobilstation zu verwenden ist, wenn sie Zugang zum zweiten drahtlosen Kommunikationsnetzwerk anfordert, und worin die Information eine Adresse betrifft, die bereits zur Kommunikation mit dem ersten drahtlosen Kommunikationsnetzwerk verwendet wird.

5. Verfahren nach einem der vorhergehenden Ansprüche, das durch eine Mobilstation durchgeführt wird, worin das Verfahren umfasst: Empfangen einer Kapazitätsangabe vom drahtlosen Zugangspunkt, die das zweite drahtlose Kommunikationsnetzwerk als ein drahtloses Kommunikationsnetzwerk höherer Priorität angibt.

6. Verfahren nach einem der vorhergehenden Ansprüche, das durch eine Mobilstation durchgeführt wird, worin das Anfordern umfasst: Anfordern von Zugang zum zweiten drahtlosen Kommunikationsnetzwerk unter Verwendung einer gleichen Adresse wie bei Kommunikation mit dem ersten drahtlosen Kommunikationsnetzwerk.

7. Verfahren nach einem der vorhergehenden Ansprüche, das durch eine Mobilstation durchgeführt wird, worin das erste drahtlose Kommunikationsnetzwerk ein Long-Term-Evolution-(LTE-)Netzwerk oder ein verbessertes LTE-Netzwerk ist und das zweite drahtlose Kommunikationsnetzwerk ein WiFi-Netzwerk ist.

8. Verfahren nach einem der vorhergehenden Ansprüche, das durch eine Mobilstation durchgeführt wird, worin das Verfahren umfasst: Empfangen einer Funktionalitätsangabe vom drahtlosen Zugangspunkt, die angibt, dass der drahtlose Zugangspunkt gleichzeitige Sitzungen über das erste drahtlose Kommunikationsnetzwerk und über das zweite drahtlose Kommunikationsnetzwerk unterstützt.

9. Mobilstation (20) zum Handhaben des Zugangs zu unterschiedlichen drahtlosen Kommunikationsnetzwerke über einen drahtlosen Zugangspunkt, wobei der drahtlose Zugangspunkt (10) dafür konfiguriert ist, unterschiedliche drahtlose Kommunikationsnetzwerke mit unterschiedlichen Funkzugangstechnologien zu unterstützen, wobei die Mobilstation (20) umfasst:
- eine Empfängerschaltung (22), die dafür konfiguriert ist, unter Verwendung eines ersten drahtlosen Kommunikationsnetzwerks vom drahtlosen Zugangspunkt einen ersten Hinweis auf ein verfügbares zweites drahtloses Kommunikationsnetzwerk und einen zweiten Hinweis zu empfangen;
- eine Prozessorschaltung (24), die dafür konfiguriert ist, zu bestimmen, ob der empfangene zweite Hinweis Information über eine Adresse einschließt, die durch die Mobilstation zu verwenden ist, wenn sie Zugang zum zweiten drahtlosen Kommunikationsnetzwerk anfordert; und wenn dies der Fall ist, Zugang zum zweiten drahtlosen Kommunikationsnetzwerk anzufordern.

10. Verfahren, das durch einen drahtlosen Zugangspunkt (10) durchgeführt wird, und zwar zum Handhaben des Zugangs von Mobilstationen zu unterschiedlichen drahtlosen Kommunikationsnetzwerken, wobei der drahtlose Zugangspunkt unterschiedliche drahtlose Kommunikationsnetzwerke mit unterschiedlichen Funkzugangstechnologien unterstützt, wobei das Verfahren umfasst:
- unter Verwendung eines ersten drahtlosen Kommunikationsnetzwerks erfolgendes Übertragen (S210) eines ersten Hinweises zur Mobilstation, der auf eine Verfügbarkeit eines zweiten drahtlosen Kommunikationsnetzwerks hinweist;
- Bestimmen (S220), ob die Mobilstation zum Handhaben von Information über eine Adresse imstande ist, die durch die Mobilstation zu verwenden ist, wenn sie Zugang zum zweiten drahtlosen Kommunikationsnetzwerk anfordert; und wenn dies der Fall ist,
- Übertragen (S230) eines zweiten Hinweises zur Mobilstation, der die Information über eine Adresse zur Verwendung durch die Mobilstation, wenn sie Zugang zum zweiten drahtlosen Kommunikationsnetzwerk anfordert, umfasst.

11. Verfahren nach dem vorhergehenden Anspruch, worin das Verfahren umfasst:
Ermitteln (S200) der Verfügbarkeit eines zweiten drahtlosen Kommunikationsnetzwerks für eine Mobilstation, die ein erstes drahtloses Kommunikationsnetzwerk verwendet.

12. Verfahren nach einem der Ansprüche 10 oder 11, das durch einen drahtlosen Zugangspunkt durchgeführt wird, worin das Verfahren umfasst: Übertragen (S222) eines dritten Hinweises zur Mobilstation, der eine Identität des ersten drahtlosen Kommunikationsnetzwerks und/oder eine Identität des zweiten drahtlosen Kommunikationsnetzwerks, das durch den drahtlosen Zugangspunkt unterstützt wird, umfasst.

13. Verfahren nach einem der Ansprüche 10 bis 12, das durch einen drahtlosen Zugangspunkt durchgeführt wird, worin das Verfahren umfasst: Empfangen (S212) einer Anforderung des zweiten Hinweises und/oder dritten Hinweises von der Mobilstation.

14. Verfahren nach einem der Ansprüche 10 bis 13, das durch einen drahtlosen Zugangspunkt durchgeführt wird, worin das Bestimmen umfasst: auf einer Adresszuordnungsprozedur beruhendes Bestimmen, ob die Mobilstation imstande ist, unter Verwendung des ersten Kommunikationsnetzwerks auf das zweite drahtlose Kommunikationsnetzwerk zuzugreifen.

15. Verfahren nach dem vorhergehenden Anspruch, das durch einen drahtlosen Zugangspunkt durchgeführt wird, worin die Adresszuordnungsprozedur auf dem Zuordnen und/oder Verknüpfen einer Adresse der Mobilstation, die zum Zugreifen auf das zweite drahtlose Kommunikationsnetzwerk verwendet wird, mit einer Adresse der Mobilstation, die gespeichert ist und bei Kommunikation mit dem ersten drahtlosen Kommunikationsnetzwerk verwendet wird, beruht.

16. Verfahren nach einem der Ansprüche 10 bis 15, das durch einen drahtlosen Zugangspunkt durchgeführt wird, worin das Verfahren umfasst: Übertragen (S224) einer Kapazitätsangabe zur Mobilstation, die das zweite drahtlose Kommunikationsnetzwerk als ein drahtloses Kommunikationsnetzwerk höherer Priorität angibt.

17. Verfahren nach einem der Ansprüche 10 bis 16, das durch einen drahtlosen Zugangspunkt durchgeführt wird, worin das erste drahtlose Kommunikationsnetzwerk ein Long-Term-Evolution-(LTE-)Netzwerk oder ein verbessertes LTE-Netzwerk ist und das zweite drahtlose Kommunikationsnetzwerk ein WiFi-Netzwerk ist.

18. Verfahren nach einem der vorhergehenden Ansprüche, das durch einen drahtlosen Zugangspunkt durchgeführt wird, worin das Verfahren umfasst: Übertragen einer Funktionalitätsangabe, die angibt, dass der drahtlose Zugangspunkt gleichzeitige Sitzungen über das erste drahtlose Kommunikationsnetzwerk und über das zweite drahtlose Kommunikationsnetzwerk unterstützt.

19. Drahtloser Zugangspunkt, AP, (10) zum Handhaben des Zugangs von Mobilstationen zu unterschiedlichen drahtlosen Kommunikationsnetzwerken, wobei der drahtlose AP (10) dafür konfiguriert ist, unterschiedliche drahtlose Kommunikationsnetzwerke mit unterschiedlichen Funkzugangstechnologien zu unterstützen, wobei der drahtlose AP umfasst:
- eine AP-Senderschaltung (16), die dafür konfiguriert ist, unter Verwendung eines ersten drahtlosen Kommunikationsnetzwerks einen ersten Hinweis zur Mobilstation (20) zu übertragen, der auf eine Verfügbarkeit eines zweiten drahtlosen Kommunikationsnetzwerks hinweist;
- eine AP-Prozessorschaltung (14), die dafür konfiguriert ist, zu bestimmen, ob die Mobilstation zum Handhaben von Information über eine Adresse imstande ist, die durch die Mobilstation zu verwenden ist, wenn sie Zugang zum zweiten drahtlosen Kommunikationsnetzwerk anfordert; und wenn dies der Fall ist,
- einen zweiten Hinweis zur Mobilstation zu übertragen, der die Information über eine Adresse zur Verwendung durch die Mobilstation, wenn sie Zugang zum zweiten drahtlosen Kommunikationsnetzwerk anfordert, umfasst.

## Revendications

1. Procédé mis en oeuvre par une station mobile (20) pour gérer l'accès à différents réseaux de communication sans fil par l'intermédiaire d'un point d'accès sans fil (10), le point d'accès sans fil prenant en charge différents réseaux de communication sans fil présentant différentes technologies d'accès radio, le procédé comprenant les étapes ci-dessous consistant à :
- recevoir (S100), en provenance du point d'accès sans fil utilisant un premier réseau de communication sans fil, une première indication d'un second réseau de communication sans fil disponible ;
- recevoir (S110), en provenance du point d'accès sans fil utilisant le premier réseau de communication sans fil, une deuxième indication ;
- déterminer (S120) si la deuxième indication reçue inclut des informations d'une adresse devant être utilisée par la station mobile pour demander l'accès au second réseau de communication sans fil, et le cas échéant,
- demander (S130) l'accès au second réseau de communication sans fil.

2. Procédé mis en oeuvre par une station mobile selon la revendication précédente, dans lequel le procédé comprend l'étape consistant à recevoir une troisième indication en provenance du point d'accès sans fil, comprenant une identité du premier réseau de communication sans fil et/ou une identité du second réseau de communications pris en charge par le point d'accès sans fil.

3. Procédé mis en oeuvre par une station mobile selon l'une quelconque des revendications précédentes, dans lequel le procédé comprend l'étape consistant à demander (S112), à partir du point d'accès sans fil, la deuxième indication.

4. Procédé mis en oeuvre par une station mobile selon l'une quelconque des revendications précédentes, dans lequel l'étape de détermination consiste à déterminer si la deuxième indication reçue comprend des informations d'une adresse devant être utilisée par la station mobile pour demander l'accès au second réseau de communication sans fil, et dans lequel les informations concernent une adresse déjà utilisée pour les communications avec le premier réseau de communication sans fil.

5. Procédé mis en oeuvre par une station mobile selon l'une quelconque des revendications précédentes, dans lequel le procédé comprend l'étape consistant à recevoir un indicateur de capacité, en provenance du point d'accès sans fil, indiquant le second réseau de communication sans fil en tant que réseau de communication sans fil de priorité supérieure.

6. Procédé mis en oeuvre par une station mobile selon l'une quelconque des revendications précédentes, dans lequel l'étape de demande consiste à demander l'accès au second réseau de communication sans fil en utilisant une même adresse que dans des communications avec le premier réseau de communication sans fil.

7. Procédé mis en oeuvre par une station mobile selon l'une quelconque des revendications précédentes, dans lequel le premier réseau de communication sans fil est un réseau de technologie d'évolution à long terme, LTE, ou un réseau LTE amélioré, et le second réseau de communication sans fil est un réseau Wi-Fi.

8. Procédé mis en oeuvre par une station mobile selon l'une quelconque des revendications précédentes, dans lequel le procédé comprend l'étape consistant à recevoir, à partir du point d'accès sans fil, un indicateur de fonctionnalité indiquant que le point d'accès sans fil prend en charge des sessions simultanées sur le premier réseau de communication sans fil et sur le second réseau de communication sans fil.

9. Station mobile (20) pour gérer l'accès à différents réseaux de communication sans fil par l'intermédiaire d'un point d'accès sans fil, le point d'accès sans fil (10) étant configuré de manière à prendre en charge différents réseaux de communication sans fil présentant différentes technologies d'accès radio, la station mobile (20) comprenant :
- un circuit de récepteur (22) configuré de manière à recevoir, en provenance du point d'accès sans fil utilisant un premier réseau de communication sans fil, une première indication d'un second réseau de communication sans fil disponible, et une deuxième indication ;
- un circuit de processeur (24) configuré de manière à déterminer si la deuxième indication reçue inclut des informations d'une adresse devant être utilisée par la station mobile pour demander l'accès au second réseau de communication sans fil, et le cas échéant, demander l'accès au second réseau de communication sans fil.

10. Procédé mis en oeuvre par un point d'accès sans fil (10) pour gérer l'accès de stations mobiles à différents réseaux de communication sans fil, le point d'accès sans fil prenant en charge différents réseaux de communication sans fil présentant différentes technologies d'accès radio, le procédé comprenant les étapes ci-dessous consistant à :
- transmettre (S210), à la station mobile, en utilisant un premier réseau de communication sans fil, une première indication indiquant une disponibilité d'un second réseau de communication sans fil ;
- déterminer (S220) si la station mobile est en mesure de gérer des informations d'une adresse devant être utilisée par la station mobile pour demander l'accès au second réseau de communication sans fil ; et le cas échéant,
- transmettre (S230), à la station mobile, une deuxième indication comprenant les informations d'une adresse destinée à être utilisée par la station mobile pour demander l'accès au second réseau de communication sans fil.

11. Procédé selon la revendication précédente, dans lequel le procédé comprend l'étape consistant à détecter (S200), pour une station mobile utilisant un premier réseau de communication sans fil, la disponibilité d'un second réseau de communication sans fil.

12. Procédé mis en oeuvre par un point d'accès sans fil selon l'une quelconque des revendications 10 ou 11, dans lequel le procédé comprend l'étape consistant à transmettre (S222) une troisième indication, à la station mobile, comprenant une identité du premier réseau de communication sans fil et/ou une identité du second réseau de communications pris en charge par le point d'accès sans fil.

13. Procédé mis en oeuvre par un point d'accès sans fil selon l'une quelconque des revendications 10 à 12, dans lequel le procédé comprend l'étape consistant à recevoir (S212) une demande, en provenance de la station mobile, concernant la deuxième indication et/ou la troisième indication.

14. Procédé mis en oeuvre par un point d'accès sans fil selon l'une quelconque des revendications 10 à 13, dans lequel l'étape de détermination consiste à déterminer, sur la base d'une procédure de mise en correspondance d'adresses, si la station mobile, en utilisant le premier réseau de communication, est en mesure d'accéder au second réseau de communication sans fil.

15. Procédé mis en oeuvre par un point d'accès sans fil selon la revendication précédente, dans lequel la procédure de mise en correspondance d'adresses est basée sur la mise en correspondance et/ou l'association d'une adresse de la station mobile utilisée pour accéder au second réseau de communication sans fil, avec une adresse de la station mobile stockée et utilisée dans des communications avec le premier réseau de communication sans fil.

16. Procédé mis en oeuvre par un point d'accès sans fil selon l'une quelconque des revendications 10 à 15, dans lequel le procédé comprend l'étape consistant à transmettre (S224) un indicateur de capacité, à la station mobile, indiquant le second réseau de communication sans fil en tant que réseau de communication sans fil de priorité supérieure.

17. Procédé mis en oeuvre par un point d'accès sans fil selon l'une quelconque des revendications 10 à 16, dans lequel le premier réseau de communication sans fil est un réseau de technologie d'évolution à long terme, LTE, ou un réseau LTE amélioré, et le second réseau de communication sans fil est un réseau Wi-Fi.

18. Procédé mis en oeuvre par un point d'accès sans fil selon l'une quelconque des revendications précédentes, dans lequel le procédé comprend l'étape consistant à transmettre un indicateur de fonctionnalité indiquant que le point d'accès sans fil prend en charge des sessions simultanées sur le premier réseau de communication sans fil et sur le second réseau de communication sans fil.

19. Point d'accès sans fil, AP, (10), destiné à gérer l'accès de stations mobiles à différents réseaux de communication sans fil, le point AP sans fil (10) étant configuré de manière à prendre en charge différents réseaux de communication sans fil présentant différentes technologies d'accès radio, le point AP sans fil comprenant :
- un circuit d'émetteur de point AP (16) configuré de manière à transmettre, à la station mobile (20) utilisant un premier réseau de communication sans fil, une première indication indiquant une disponibilité d'un second réseau de communication sans fil ;
- un circuit de processeur de point AP (14) configuré de manière à déterminer si la station mobile est en mesure de gérer des informations d'une adresse devant être utilisée par la station mobile pour demander l'accès au second réseau de communication sans fil ; et le cas échéant,
- à transmettre, à la station mobile, une deuxième indication comprenant les informations d'une adresse destinée à être utilisée par la station mobile pour demander l'accès au second réseau de communication sans fil.
